# EUROPÄISCHE PATENTSCHRIFT

(11) **EP 3 883 732 B1**
(45) Veröffentlichungstag und Bekanntmachung des Hinweises auf die Patenterteilung: **23.07.2025**
(21) Anmeldenummer: 19808540.9
(22) Anmeldetag: 12.11.2019
(51) Int. Cl.: B28B 7/22, E04G 11/08, G06F 111/20, G06F 30/13, G06F 113/22, G06F 119/18

(54) **VERFAHREN ZUR SCHALUNGSPLANUNG FÜR DAS BETONIEREN EINES BAUWERKS**
METHOD FOR FORMWORK PLANNING FOR THE CONCRETING OF A CONSTRUCTION
PROCÉDÉ POUR LA PLANIFICATION DE COFFRAGES POUR LE BÉTONNAGE D'UN BÂTIMENT

(30) Priorität: 19.11.2018 DE 102018129033
(43) Veröffentlichungstag der Anmeldung: 29.09.2021
(73) Patentinhaber: PERI SE, 89264 Weißenhorn (DE)
(72) Erfinder: KSIAZKIEWICZ, Patrick, 89264 Weißenhorn (DE)
(74) Vertreter: Holzwarth-Rochford, Andreas
(86) Internationale Anmeldenummer: PCT/EP2019/080995
(87) Internationale Veröffentlichungsnummer: WO 2020/104249

(56) Entgegenhaltungen:
- CN-A- 105 302 929
- PLANITEC: "Dokumentation PPL 11.0 Grundlagen", 1 August 2017 (2017-08-01), pages 1 - 49, XP055672271, Retrieved from the Internet <URL:https://docplayer.org/59966331-Dokumentation-ppl-11-0-grundlagen-inhalt.html> [retrieved on 20200228]
- CHIJOO LEE ET AL: "The Development of Automatic Module for Formwork Layout using the BIM", 1 January 2009 (2009-01-01), XP055672308, Retrieved from the Internet <URL:https://pdfs.semanticscholar.org/743a/c6065f2ff1e5b9c000f0752fd806c035dd9b.pdf?_ga=2.95434972.1354061140.1582878688-1511892468.1582878688> [retrieved on 20200228]
- RAMESH KANNAN ET AL: "Automated Construction Layout and Simulation of Concrete Formwork Systems Using Building Information Modeling", THE 4TH INTERNATIONAL CONFERENCE OF EACEF (EUROPEAN ASIAN CIVIL ENGINEERING FORUM)NATIONAL UNIVERSITY OF SINGAPORE, SINGAPORE, JUNE 26-28, 2013, 1 January 2013 (2013-01-01), XP055672310, DOI: 10.13140/RG.2.1.4124.6244

## Beschreibung

Die vorliegende Anmeldung beansprucht die Priorität der deutschen Patentanmeldung Nr. 10 2018 129 033.0, eingereicht am 19. November 2018.

Die Erfindung betrifft Schalungen, die bei der Herstellung eines Bauwerks durch Betonieren verwendet werden.

### Stand der Technik

Wenn ein Bauwerk durch Betonieren hergestellt wird, wird in der Regel eine Schalung als Gussform für den Frischbeton eingesetzt. Dabei wird das Bauwerk häufig nicht "aus einem Guss" hergestellt, sondern in bestimmten Bauabschnitten, die auch Arbeitstakte genannt werden. Üblicherweise wird die Schalung für einen Arbeitstakt montiert, mit Beton ausgefüllt und nach dem Abbinden des Betons wieder entfernt. Während der Beton des einen Arbeitstakts abbindet, und/oder danach, wird die Schalung für den nächsten Arbeitstakt montiert.

Um eine Schalung schnell herstellen zu können und das Material vielfach wiederverwenden zu können, werden Schalungssysteme aus vorgefertigten Standardelementen eingesetzt. Ein beispielhaftes solches Schalungssystem ist aus der WO 2005/040 525 A1 bekannt.

Üblicherweise werden die Arbeitstakte und die für die einzelnen Arbeitstakte jeweils zu montierenden Schalungen ausgehend von einem Grundriss des herzustellenden Bauwerks geplant.

Die Dokumentation "PPL 11.0 Grundlagen" von Planitec offenbart ein Verfahren zur Umwandlung eines vorgegebenen Grundrisses in einen Schalungsplan, das Schalungselemente aus einer Bibliothek automatisch sucht und einfügt.

(Chijoo Lee et al., "The Development of Automatic Module for Formwork Layout using the BIM", ICCEM/ICCPM Jeju, Korea (2009)) offenbart ein Verfahren zur Unterstützung der Schalungsplanung auf der Basis eines Gebäudeinformationsmodells (BIM).

### Aufgabe und Lösung

Aufgabe der vorliegenden Erfindung ist, ein Verfahren bereitzustellen, mit dem die Planung von Schalungen ausgehend von einem vorgegebenen Grundriss vereinfacht und zugleich das erhaltene Ergebnis qualitativ verbessert werden kann.

Diese Aufgabe wird erfindungsgemäß gelöst durch ein Verfahren gemäß Hauptanspruch. Weitere vorteilhafte Ausgestaltungen ergeben sich aus den darauf rückbezogenen Unteransprüchen.

### Offenbarung der Erfindung

Im Rahmen der Erfindung wurde ein computerimplementiertesVerfahren zur Umwandlung eines vorgegebenen Grundrisses in einen Schalungsplan entwickelt. Dieser Schalungsplan ist ein Plan für die Montage von Schalungselementen für mindestens einen Arbeitstakt der Herstellung eines dem Grundriss entsprechenden Bauwerks durch Betonieren. Nach der Umwandlung wird eine zu dem Schalungsplan konforme räumliche Anordnung von Schalungselementen hergestellt.

Bei dem Verfahren wird der vorgegebene Grundriss durch einen Benutzer bereitgestellt. Dies kann auf beliebigem Wege erfolgen, wie beispielsweise mit der Maus, durch Touch-Eingabe, durch Analyse eines Fotos oder eines anderen Bilddokuments, und/oder durch Import aus einer CAD-Anwendung. Auch Mischformen sind möglich. So kann der Benutzer beispielsweise auf einer Anzeigevorrichtung, wie etwa einem Monitor oder einem Display eines Tablet-Computers, ein PDF-Dokument oder ein Foto eines in Papierform vorliegenden Grundrisses in den Hintergrund legen und den Grundriss hiervon abzeichnen. Der Grundriss enthält vorgegebene Taktfugen, wobei diese Taktfugen nacheinander zu betonierende Bauabschnitte des herzustellenden Bauwerks trennen.

Es wird ein Katalog bereitgestellt, der einer Mehrzahl von Mustern für Verläufe geplanter Wände jeweils eine räumliche Anordnung von Schalungselementen zuordnet, mit der dieser Verlauf durch Betonieren in das herzustellende Bauwerk eingebracht werden kann.

In Bereichen des vorgegebenen Grundrisses, in denen noch keine Vorkommen von in dem Katalog enthaltenen Mustern gefunden worden sind, werden Vorkommen eines in dem Katalog enthaltenen Musters gesucht. Zu jedem gefundenen Vorkommen des Musters wird dem Schalungsplan diejenige räumliche Anordnung von Schalungselementen, die der Katalog dem Muster zuordnet, hinzugefügt.

Jeder Bereich des vorgegebenen Grundrisses, der bereits als zu einem in dem Katalog enthaltenen Muster korrespondierend erkannt wurde, kann als abgearbeitet angesehen werden. Das bedeutet, dass für diesen Bereich des Grundrisses bereits eine Schalungslösung gefunden ist und dieser Bereich nicht mehr nach weiteren Mustern durchsucht werden muss. Die Buchführung, welche Bereiche des Grundrisses bereits abgearbeitet sind, kann in beliebiger Weise geführt werden. So ist es beispielsweise aus dem Vorhandensein einer räumlichen Anordnung von Schalungselementen im Schalungsplan ersichtlich, dass der hierzu korrespondierende Bereich des Grundrisses bereits abgearbeitet ist. Es kann jedoch auch beispielsweise jeder abgearbeitete Bereich des Grundrisses in einer Repräsentation dieses Grundrisses als abgearbeitet markiert werden.

Nachdem alle Vorkommen des Musters abgearbeitet sind, wird geprüft, ob der vorgegebene Grundriss vollständig abgearbeitet ist. Wenn dies nicht der Fall ist, wenn also der Schalungsplan noch nicht vollständig ist, dann wird geprüft, ob der Katalog weitere Muster enthält, nach denen in dem vorgegebenen Grundriss noch nicht gesucht wurde. Ist dies der Fall, wird mit einem dieser weiteren Muster zur Suche in dem noch nicht abgearbeiteten Teil des vorgegebenen Grundrisses zurückverzweigt. Es wird also über die Suche, das Hinzufügen und das Prüfen iteriert, um den vorgegebenen Grundriss vollständig abzuarbeiten.

In Antwort darauf, dass der vorgegebene Grundriss nicht vollständig abgearbeitet ist und der Katalog keine weiteren Muster enthält, nach denen in dem vorgegebenen Grundriss noch nicht gesucht wurde, wird geprüft, ob mindestens ein noch nicht abgearbeiteter Bereich des Grundrisses mindestens eine Taktfuge enthält. Ist dies der Fall, so wird dieser Bereich unter Ausblendung der Taktfuge nach Mustern aus dem Katalog durchsucht. Wenn nun bei dieser Suche ein Muster gefunden wird, wird mindestens eine Taktfuge in dem geplanten Grundriss so versetzt und/oder gedreht, dass sie das gefundene Muster nicht mehr durchbricht, und/oder es wird eine Aufforderung an den Benutzer ausgegeben, die Taktfuge in dieser Weise zu versetzen.

Es wurde erkannt, dass auf diese Weise die Planung von Schalungen deutlich vereinfacht werden kann. Insbesondere werden die Anforderungen an die Qualifikation von Personen, die die Planung vornehmen, herabgesetzt.

Der Fachmann, der einen vorgegeben Grundriss vor sich hat und die verfügbaren Standardelemente des Schalungssystems kennt, ist üblicherweise in der Lage, jeden Grundriss in mindestens eine Konfiguration der Standardelemente zu übersetzen und diese gegebenenfalls noch mit für dieses Bauwerk individueller Schalung zu ergänzen. Er ist also in der Lage, das Bauwerk ausgehend vom Grundriss durch Betonieren herzustellen. Es hat sich jedoch gezeigt, dass eine Schalung für einen gegebenen Arbeitstakt mit einem gegebenen Grundriss mit vielen verschiedenen Konfigurationen der Standardelemente hergestellt werden kann. Nach dem Betonieren und Entfernen der Schalung entsteht zwar jeweils das im Wesentlichen gleiche Endergebnis, doch sind manche Konfigurationen im Hinblick auf die Anforderungen, die an den Bauprozess gestellt werden, besser als andere. Beispielsweise können sich die möglichen Konfigurationen dahingehend unterscheiden,
- wie viele Schalungselemente bei der Montage bewegt werden müssen, beispielsweise per Kran,
- wie viele unterschiedliche Schalungselemente auf der Baustelle vorgehalten werden müssen,
- wie lange die Montage der Schalung insgesamt dauert, und/oder
- wie hoch der Kostenaufwand für die Schalung insgesamt ist.

Diese Ziele können durchaus gegenläufig sein. So ermöglicht beispielsweise ein großer Lagerbestand von Schalungselementen auf der Baustelle eine schnelle Montage vieler unterschiedlicher Konfigurationen um den Preis, dass die Lagerhaltung Kapital bindet und Platz auf der Baustelle beansprucht.

In der Erfahrung der Anmelderin hat sich eine langjährige Expertise herausgebildet, welche räumliche Anordnung von Schalungselementen für die Verschalung bestimmter Wandverläufe im Hinblick auf bestimmte Optimierungsziele am sinnvollsten ist. So gibt es zu einem gegebenen Wandverlauf beispielsweise eine erste räumliche Anordnung, die am schnellsten zu montieren ist, eine zweite räumliche Anordnung, die mit der geringsten Anzahl unterschiedlicher Teile auskommt, und eine dritte Anordnung, deren Montage mit der geringsten Anzahl Materialbewegungen auskommt. Indem die entsprechende Anordnung aus dem Katalog abgerufen und dem Schalungsplan hinzugefügt wird, wird die genannte Expertise für die zumindest teilweise automatisierte Erstellung eines Schalungsplans nutzbar gemacht.

Diese zumindest teilweise automatisierte Erstellung kann insbesondere auch von Personen vor Ort auf der Baustelle vorgenommen werden, die zwar das Basiswissen zum Auffinden irgendeiner passenden Konfiguration der Schalungselemente besitzen, nicht jedoch die genannte Expertise zum Auffinden der optimalen Konfiguration. So kann es beispielsweise erforderlich werden, auf Grund wie auch immer gearteter Komplikationen den geplanten Grundriss kurzfristig abzuändern, wodurch der Schalungsplan hinfällig wird.

Auch kann beispielsweise das Optimierungsziel, das dem ursprünglichen Schalungsplan zu Grunde lag, durch ein neues ersetzt werden. Wurde beispielsweise die ursprüngliche Planung unter der Prämisse erstellt, dass die Gesamtkosten minimiert werden sollen, so kann sich plötzlich die neue Situation ergeben, dass das Bauprojekt beispielsweise wetterbedingt in Verzug geraten ist und ohne Rücksicht auf die Kosten ein Arbeitstakt schnellstens fertigzustellen ist. Die Wetterabhängigkeit ist ein Faktor, der die Planungssicherheit beim Bauen grundsätzlich einschränkt. Mit dem hier beschriebenen automatisierten Verfahren ist ein kurzfristiger Wechsel des Optimierungsziels jederzeit möglich, indem der verwendete Katalog gegen einen auf das neue Optimierungsziel gerichteten ausgetauscht wird.

In einer besonders vorteilhaften Ausgestaltung wird somit der Katalog aus einer Mehrzahl von Katalogen ausgewählt, und diese Kataloge unterscheiden sich hinsichtlich der Optimierungsziele, bezüglich derer die in ihnen enthaltenen räumlichen Anordnungen von Schalungselementen optimiert sind.

Das beschriebene Vorgehen ist iterativ, d.h., wenn alle Vorkommen eines Musters abgearbeitet sind, werden Vorkommen des nächsten im Katalog enthaltenen Musters gesucht. Dieses Vorgehen ist insbesondere vorteilhaft, wenn es einen Versatz zwischen räumlichen Anordnungen von Schalungselementen in dem Schalungsplan gibt. Der Katalog kann beispielsweise mit Mustern und hierzu korrespondierenden räumlichen Anordnungen von Schalungselementen beginnen, die sich auf bestimmte fixe Situationen beziehen. Hieran können sich in dem Katalog beispielsweise Muster und hierzu korrespondierende räumliche Anordnungen anschließen, mit denen ein Versatz zwischen den bereits eingeplanten räumlichen Anordnungen ganz oder teilweise kompensiert werden kann.

Am Ende des Verfahrens ist im Idealfall der vorgegebene Grundriss vollständig abgearbeitet, d.h., vollständig in einen Schalungsplan übersetzt. Für die genannten vorteilhaften Wirkungen ist dies jedoch nicht erforderlich. Die Vereinfachung und die Qualitätsverbesserung im Hinblick auf die gemäß Katalog verfolgten Optimierungsziele treten auch dann ein, wenn nur ein Teil des Grundrisses automatisiert in einen Schalungsplan umwandelbar ist und beispielsweise für eine Spezialstruktur, die mit vorgefertigten Schalungselementen nicht realisierbar ist, eine individuelle Schalung nötig ist.

Vorteilhaft wird das im Katalog enthaltene Muster bei der Suche im vorgegebenen Grundriss gedreht und/oder skaliert. Es wird dann in Antwort darauf, dass Vorkommen des gedrehten und/oder skalierten Musters in dem vorgegebenen Grundriss gefunden wurden, die dem Schalungsplan hinzugefügte räumliche Anordnung von Schalungselementen entsprechend gedreht und/oder skaliert. Bei den meisten dieser räumlichen Anordnungen ändert sich das qualitative Verhalten in Bezug auf die jeweiligen Optimierungsziele nicht. Somit muss der Katalog nicht durch viele gedrehte und/oder skalierte Kopien wesensgleicher Muster, bzw. wirkungsgleicher räumlicher Anordnungen, aufgebläht werden.

Ob beispielsweise eine linke Ecke und eine rechte Ecke eines Bauwerks in dieser Weise technisch äquivalent sind und somit im Katalog durch eine einzige generische Ecke repräsentiert werden können, kann beispielsweise von einem für die Schalung verwendeten Baukastensystem abhängen. Dieses Baukastensystem kann auch beispielsweise vorgeben, inwieweit die räumlichen Anordnungen von Schalungselementen jeweils physisch drehbar und/oder skalierbar sind.

Vorteilhaft umfasst der Katalog mindestens Richtungsänderungen und/oder Verzweigungen von Wänden als Muster. Mit diesen Elementen lässt sich der größte Teil üblicher Grundrisse abdecken. Gerade Wände können optional ebenfalls in dem Katalog enthalten sein. Sie können aber auch beispielsweise in einer späteren Arbeitsphase im Schalungsplan zwischen den dort bereits vorgesehenen räumlichen Anordnungen von Schalungselementen ergänzt werden. Dieser Vorgang wird auch als Zuziehen oder Lückenschließen (GAP) bezeichnet.

In einer besonders vorteilhaften Ausgestaltung umfasst der Katalog mindestens rechtwinklige oder in anderen Winkeln verlaufende Richtungsänderungen von Wänden, Kreuzungen von Wänden, T-förmige Verzweigungen von Wänden, und/oder gebogene Wände mit konstantem Krümmungsradius, als Muster. Gerade bei diesen Elementen macht es im Hinblick auf typische Optimierungsziele einen besonders großen Unterschied, ob sie mit der besten oder mit der schlechtesten der prinzipiell passenden räumlichen Anordnungen von Schalungselementen realisiert werden. Insoweit gebogene Wände nicht im Katalog vorkommen, können sie beispielsweise ebenfalls im Rahmen des erwähnten Zuziehens oder Lückenschließens nachträglich im Schalungsplan ergänzt werden.

In einer weiteren besonders vorteilhaften Ausgestaltung werden in dem Grundriss zuerst Richtungsänderungen und/oder Verzweigungen von Wänden gesucht. Erst danach werden gerade Wände gesucht. Auf diese Weise wird erreicht, dass zuerst diejenigen Elemente des Grundrisses abgearbeitet werden, bei deren Realisierung ohne die im Katalog enthaltene Expertise am meisten falsch gemacht werden kann. Insbesondere wird der Tendenz entgegengewirkt, dass durch das Abarbeiten einer geraden Wand im Grundriss die Erkennbarkeit einer noch nicht abgearbeiteten Richtungsänderung und/oder Verzweigung in dem Grundriss verschlechtert wird.

Der vorgegebene Grundriss enthält vorgegebene Taktfugen. Diese Taktfugen trennen nacheinander zu betonierende Bauabschnitte des herzustellenden Bauwerks und können vom Benutzer beispielsweise mit der Maus oder per Touch-Eingabe in dem Grundriss gesetzt werden. Die Taktfugen können beispielsweise dahingehend statisch motiviert sein, dass bestimmte für die Bauwerkstatik wichtige Strukturen nicht durch eine Taktfuge unterbrochen werden sollten. Die Taktfugen können aber auch beispielsweise durch die Arbeitszeitplanung, etwa durch die maximal in einer bestimmten Zeit bearbeitbare Schalungsfläche oder durch die pro Arbeitstakt verfügbare Betonmenge, sowie auch beispielsweise durch ästhetische Aspekte motiviert sein.

Insbesondere die pro Arbeitstakt verfügbare Betonmenge ist häufig eine harte Randbedingung, und es gibt keine praktische Option, eine benötigte Mehrmenge kurzfristig zu beschaffen. Wenn dann ein Arbeitstakt so geplant wird, dass die verfügbare Betonmenge nicht ausreicht, kann der Arbeitstakt nicht "aus einem Guss" realisiert werden, weil die Schalung nicht zur Gänze mit Beton gefüllt werden kann. Wird nun aber der fehlende Beton erst später zugegeben, hat der früher zugeführte Beton bereits teilweise oder vollständig abgebunden. In dem Bauteil entsteht somit eine Grenzfläche zwischen Bereichen, in denen das Abbinden des Betons unterschiedlich weit fortgeschritten ist. Derartige Grenzflächen sind zu vermeiden, da sie zu einer strukturellen Schwächung des Bauteils führen können.

Um derartige Planungsfehler automatisch abzufangen, wird in einer weiteren besonders vorteilhaften Ausgestaltung aus dem Grundriss für mindestens einen Arbeitstakt die zur Realisierung benötigte Betonmenge und/oder Wandlänge berechnet und mit einem vorgegebenen Schwellwert verglichen. In Antwort darauf, dass der vorgegebene Schwellwert überschritten wird, wird eine Warnung an den Benutzer ausgegeben, und/oder dem Benutzer wird ein Vorschlag für eine Versetzung mindestens einer Taktfuge gemacht. Dieser Vorschlag ist so geartet, dass, wenn der Benutzer ihn akzeptiert, der vorgegebene Schwellwert nicht mehr überschritten wird. Die Wandlänge ist insofern eine weitere Randbedingung, als bei zu langen Wänden eine Tendenz zur Rissbildung durch das Schwinden des Betons beim Abbinden entsteht und Maßnahmen zur Rissweitenbeschränkung erforderlich sind.

Infolge der Unterteilung in Arbeitstakte können insbesondere separate Schalungspläne für diese Arbeitstakte erstellt werden. Dadurch wird der Bedingung Rechnung getragen, dass die im Rahmen eines Arbeitstaktes geplanten Wände sich nicht über eine Taktfuge erstrecken sollen.

In Antwort darauf, dass der vorgegebene Grundriss nicht vollständig abgearbeitet ist und der Katalog keine weiteren Muster enthält, nach denen in dem vorgegebenen Grundriss noch nicht gesucht wurde, wird geprüft, ob mindestens ein noch nicht abgearbeiteter Bereich des Grundrisses mindestens eine Taktfuge enthält. Ist dies der Fall, so wird dieser Bereich unter Ausblendung der Taktfuge nach Mustern aus dem Katalog durchsucht. Das bedeutet, dass bei dieser Suche so getan wird, als ob es die Taktfuge nicht gäbe.

Wenn nun bei dieser Suche ein Muster gefunden wird, dann bedeutet dies, dass die Taktfuge vom Benutzer in dem Sinne ungünstig gesetzt wurde, dass sie das Muster durchbricht. Die Anforderung, mitten in dem Muster einen Arbeitstakt zu beenden und die Arbeit dort später fortzusetzen, steht im Konflikt mit der Anforderung, eine dem Muster entsprechende Struktur entsprechend der im Katalog für dieses Muster vorgesehenen räumlichen Anordnung von Schalungselementen zu schalen. Die Taktfuge wird mit hoher Wahrscheinlichkeit mitten durch ein Schalungselement verlaufen.

Daher wird in einem derartigen Fall mindestens eine Taktfuge in dem geplanten Grundriss so versetzt und/oder gedreht, dass sie das gefundene Muster nicht mehr durchbricht, und/oder es wird eine Aufforderung an den Benutzer ausgegeben, die Taktfuge in dieser Weise zu versetzen. In der Regel hat der Benutzer die Taktfuge nicht bewusst so gesetzt, dass sie eines der Muster im Katalog durchbricht, sondern dies ist unabsichtlich geschehen, weil der Benutzer nicht alle diese Muster im Kopf behalten kann.

Wie zuvor erläutert, treten die vorteilhaften Wirkungen des Verfahrens bereits dann ein, wenn nur für einen Teil des vorgegebenen Grundrisses automatisch ein Schalungsplan erstellt werden kann. Die Wirkungen werden jedoch umso stärker, je größer dieser Teil im Verhältnis zum kompletten Grundriss ist.

Des Weiteren wird die Wirksamkeit des Verfahrens auch nicht dadurch geschmälert, dass der im Rahmen des Verfahrens erstellte Schalungsplan eventuell nachträglich durch das beschriebene Zuziehen oder Lückenschließen komplettiert wird oder dass in weiteren nachgeschalteten Schritten eventuell noch Zubehörteile und/oder Verbindungsmittel gesetzt werden.

Die im Rahmen des Verfahrens verwendeten Kataloge können beispielsweise auf einem mobilen Gerät, etwa einem Tablet, auf der Baustelle hinterlegt sein. Es kann aber auch beispielsweise der vorgegebene Grundriss an einen Server übermittelt werden, und die Verarbeitung des Grundrisses kann auf diesem Server durchgeführt werden.

In einer weiteren besonders vorteilhaften Ausgestaltung wird der Schalungsplan durch Abgleich mit einer Liste bestellbarer Schalungselemente in eine Bestellliste für Schalungselemente umgewandelt. Auf diese Weise wird die Beschaffung der für die Schalung gemäß Schalungsplan nötigen Materialien vereinfacht, und es werden insbesondere Übertragungsfehler vermieden. Die Bestellliste kann insbesondere eine Maximalliste sein, die diejenigen Bauteile angibt, die auf der Baustelle maximal gleichzeitig benötigt werden.

Dabei muss es nicht immer eine 1:1-Zuordnung zwischen den gemäß Schalungsplan vorgesehenen Schalungselementen und den bestellten Schalungselementen geben. In einer weiteren besonders vorteilhaften Ausgestaltung wird geprüft, ob es zu zwei oder mehr Schalungselementen in der Bestellliste ein alternatives Schalungselement gibt, das die gleiche Funktion erfüllt. Wenn dies der Fall ist, tritt das alternative Schalungselement an die Stelle der zuvor vorgesehenen zwei oder mehr Schalungselemente.

Wie zuvor beschrieben, wird der Schalungsplan iterativ erstellt, indem nacheinander die Vorkommen verschiedener Muster aus dem Katalog in dem vorgegebenen Grundriss gesucht werden und indem jeweils eine räumliche Anordnung aus Schalungselementen gemäß Katalog dem Schalungsplan hinzugefügt wird. Hierbei kann ein und dasselbe Schalungselement in mehreren räumlichen Anordnungen vorkommen, so dass beispielsweise etwa beim Nebeneinandersetzen mehrerer Anordnungen, die jeweils ein gerades Schalungselement von 3 m Länge enthalten, im letztendlichen Schalungsplan zwei identische gerade Schalungselemente von 3 m Länge nebeneinander stehen. Wenn nun ein gerades Schalungselement von 6 m Länge verfügbar ist, ist es vorteilhaft, dieses an Stelle der Schalungselemente von 3 m Länge einzusetzen. Es sind dann bei der Montage weniger Materialbewegungen erforderlich, und es müssen weniger Verbindungen zwischen Schalungselementen angebracht und später wieder gelöst werden. Im Ergebnis wird also Arbeitszeit eingespart.

Die Erfindung bezieht sich auch auf ein Verfahren zur Herstellung eines Bauwerks. Bei diesem Verfahren wird ein mit dem zuvor beschriebenen Verfahren erstellter Schalungsplan bereitgestellt. Eine zu dem Schalungsplan konforme räumliche Anordnung von Schalungselementen wird hergestellt. Ein durch diese räumliche Anordnung definierter Hohlraum wird mit einem Beton gefüllt. Mit diesem Verfahren kann das Bauwerk je nach dem Optimierungsziel, das der Erstellung des Schalungsplans zu Grunde lag, beispielsweise schneller, kostengünstiger und/oder mit weniger Materialbewegungen errichtet werden.

### Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:
Figur 1: Ausführungsbeispiel des Verfahrens 100;
Figur 2: Beispielhafte Verarbeitung eines Grundrisses 1 mit günstig gesetzten Taktfugen 12;
Figur 3: Beispielhafte Verarbeitung eines Grundrisses 1 mit ungünstig gesetzten Taktfugen 12;
Figur 4: Ausführungsbeispiel des Verfahrens 300.

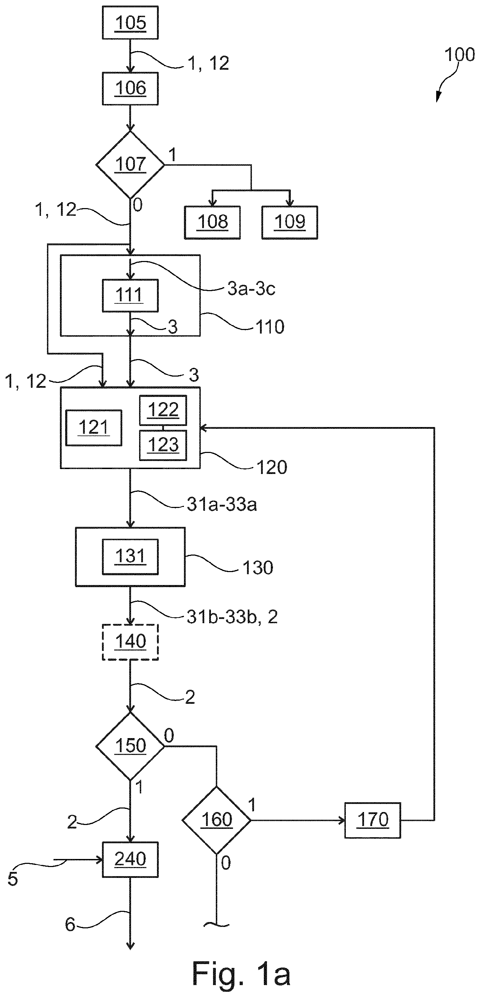

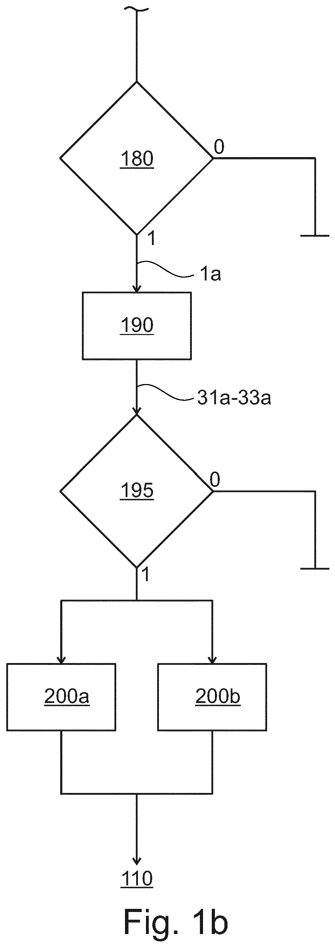

Figur 1 zeigt ein Ausführungsbeispiel des Verfahrens 100. In Schritt 105 wird der vorgegebene Grundriss 1 durch den Benutzer bereitgestellt, hier einschließlich einer oder mehrerer Taktfugen 12. In Schritt 106 wird die für die Realisierung jedes Arbeitstakts benötigte Betonmenge und/oder Wandlänge berechnet, und diese benötigte Betonmenge und/oder Wandlänge wird in Schritt 107 mit einem vorgegebenen Schwellwert verglichen. Ist der Schwellwert überschritten (Wahrheitswert 1), wird in Schritt 108 eine Warnung an den Benutzer ausgegeben, und/oder es wird in Schritt 109 dem Benutzer ein Vorschlag für eine Versetzung mindestens einer Taktfuge 12 gemacht dergestalt, dass bei Umsetzung dieses Vorschlags der vorgegebene Schwellwert nicht mehr überschritten wird.

In Schritt 110 wird der Katalog 3 bereitgestellt, der Mustern 31a-33a für Verläufe geplanter Wände 11 jeweils eine räumliche Anordnung 31b-31b von Schalungselementen zuordnet. Gemäß Block 111 kann dieser Katalog 3 beispielsweise aus einer Mehrzahl Kataloge 3a-3c ausgewählt sein, je nachdem, welches Optimierungsziel bei der Erstellung des Schalungsplans 2 verfolgt wird.

In Schritt 120 werden Vorkommen von Mustern 31a-33a aus dem Katalog 3 in dem Grundriss 1 gesucht. Dabei können diese Muster gemäß Block 121 gedreht und/oder skaliert werden. Alternativ oder auch in Kombination können gemäß Block 122 zunächst Richtungsänderungen und/oder Verzweigungen von Wänden gesucht werden, bevor anschließend gemäß Block 123 gerade Wände gesucht werden. Wie zuvor beschrieben, können gerade Wände aber auch beispielsweise im Rahmen des Zuziehens oder Lückenschließens nachträglich ergänzt werden.

In Schritt 130 wird zu jedem Vorkommen eines Musters 31a-33a die gemäß Katalog 3 zugehörige räumliche Anordnung 31b-33b von Schalungselementen dem Schalungsplan 2 hinzugefügt. Dabei wird die räumliche Anordnung 31b-33b gegebenenfalls in der gleichen Weise gedreht und/oder skaliert wie dies mit dem Muster 31a-33a getan wurde. Das Vorkommen des Musters kann optional in Schritt 140 in einer Repräsentation des Grundrisses 1 als abgearbeitet markiert werden. Wie zuvor beschrieben, ist dies jedoch nicht zwingend, denn aus der Tatsache, dass im Schalungsplan 2 an einer bestimmten Stelle Schalungselemente eingeplant sind, geht bereits hervor, dass ein hierzu korrespondierender Teil des Grundrisses 1 abgearbeitet wurde.

In Schritt 150 wird geprüft, ob der vorgegebene Grundriss 1 vollständig abgearbeitet ist. Ist dies der Fall (Wahrheitswert 1), so wird der Schalungsplan 2 in Schritt 240 durch Abgleich mit einer Liste 5 bestellbarer Schalungselemente in eine Bestellliste 6 für Schalungselemente umgewandelt. Hierbei kann es sich, wie zuvor beschrieben, insbesondere um eine Maximalliste handeln.

Ist der vorgegebene Grundriss 1 nicht vollständig abgearbeitet (Wahrheitswert 0), so wird zunächst in Schritt 160 geprüft, ob der Katalog 3 noch weitere Muster 31a-33a enthält, nach denen im vorgegebenen Grundriss 1 noch nicht gesucht wurde. Ist dies der Fall (Wahrheitswert 1), so wird mit einem dieser weiteren Muster 31a-33a zur Suche 120 zurückverzweigt.

Gibt es hingegen keine Muster 31a-33a mehr, nach denen noch nicht gesucht wurde, dann wird in Schritt 180 geprüft, ob eine Taktfuge 12 einen noch nicht abgearbeiteten Bereich 1a des Grundrisses 1 teilt. Ist dies der Fall (Wahrheitswert 1), so wird der Bereich 1a in Schritt 190 unter Ausblendung der Taktfuge 12 auf Muster 31a-33a untersucht. In Schritt 195 wird geprüft, ob ein Muster 31a-33a gefunden wurde. Wurde eines gefunden (Wahrheitswert 1), war die ungünstig gesetzte Taktfuge 12 dafür verantwortlich, dass das Muster 31a-33a nicht erkannt wurde. Es kann dann in Schritt 200a die Taktfuge 12 automatisch so versetzt und/oder gedreht werden, dass sie das gefundene Muster 31a-33a nicht mehr durchbricht, d.h. dass der Wandverlauf gemäß diesem Muster 31a-33a "aus einem Guss" hergestellt werden kann. Alternativ oder in Kombination hierzu kann der Benutzer in Schritt 200b zu einer derartigen Änderung der Taktfuge aufgefordert werden. Sodann kann ab Schritt 110 erneut mit der Erstellung des Schalungsplans 2 begonnen werden.

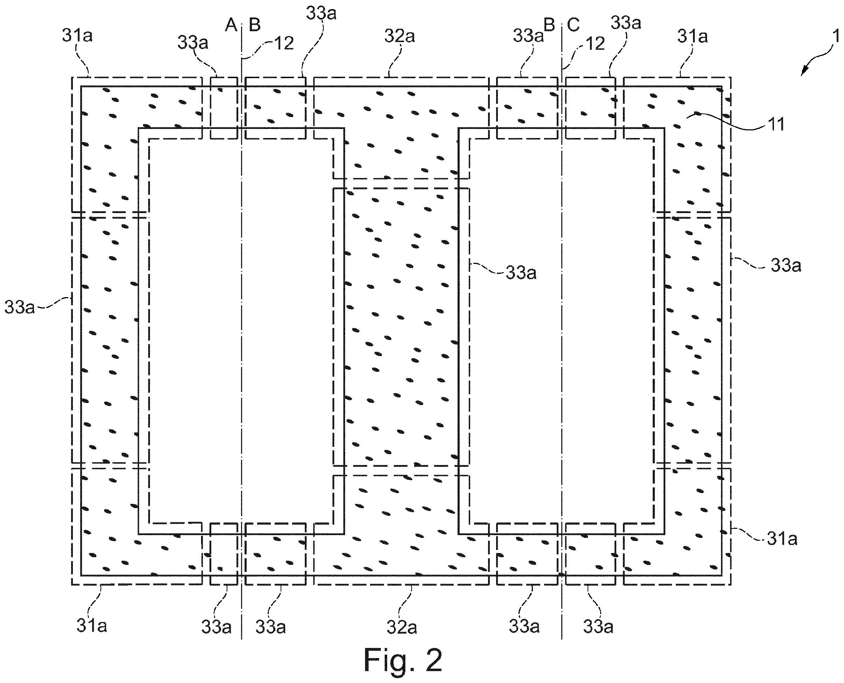

Figur 2 zeigt einen einfachen beispielhaften Grundriss 1 mit geplanten Wänden 11. Der Grundriss 1 ist durch zwei Taktfugen 12 in drei Arbeitstakte A, B und C unterteilt. Das bedeutet, dass jeweils separate Schalungspläne 2 für die drei Arbeitstakte A, B und C benötigt werden. Die im Rahmen eines jeden Arbeitstakts A, B und C geplanten Wände enden an den Taktfugen 12 bzw. 13, die diesen Arbeitstakt beschränken.

Der in diesem einfachen Beispiel verwendete Katalog 3 umfasst drei Muster für Verläufe geplanter Wände 11, nämlich rechtwinklige Richtungsänderungen 31a von Wänden 11, T-förmige Verzweigungen 32a von Wänden 11 sowie gerade Stücke 33a von Wänden 11.

Bei der Umwandlung des Grundrisses 1 in einen Schalungsplan 2 je Arbeitstakt A, B und C werden jeweils zunächst die Vorkommen von rechtwinkligen Richtungsänderungen 31a im Grundriss 1 gesucht. Im ersten Arbeitstakt A und im dritten Arbeitstakt C gibt es jeweils zwei solche Vorkommen, im zweiten Arbeitstakt keines. Den jeweiligen Schalungsplänen 2 für die Arbeitstakte A, B und C werden die laut Katalog 3 den rechtwinkligen Richtungsänderungen 31a zugeordneten räumlichen Anordnungen 31b von Schalungselementen hinzugefügt. Die rechtwinkligen Richtungsänderungen 31a sind somit abgearbeitet, was durch ihre gestrichelte Einzeichnung im Grundriss 1 angedeutet ist.

Anschließend werden die Vorkommen von T-förmigen Verzweigungen 32a in dem Grundriss 1 gesucht. Hier gibt es nur im zweiten Arbeitstakt B zwei Vorkommen; im ersten Arbeitstakt A und im dritten Arbeitstakt C keines. Den jeweiligen Schalungsplänen 2 für die Arbeitstakte A, B und C werden die laut Katalog 3 den T-förmigen Verzweigungen 32a zugeordneten räumlichen Anordnungen 32b von Schalungselementen hinzugefügt. Die T-förmigen Verzweigungen 32a sind somit abgearbeitet, wieder angedeutet durch gestrichelte Einzeichnung im Grundriss 1.

Schließlich werden die Vorkommen von geraden Wandstücken 33a in dem Grundriss 1 gesucht. Hier gibt es im ersten Arbeitstakt A drei Vorkommen, im zweiten Arbeitstakt B vier und im dritten Arbeitstakt C wieder drei. Den jeweiligen Schalungsplänen 2 für die Arbeitstakte A, B und C werden die laut Katalog 3 den geraden Wandstücken 33a zugeordneten räumlichen Anordnungen 33b von Schalungselementen hinzugefügt. Die geraden Wandstücke 33a sind somit abgearbeitet, wieder angedeutet durch gestrichelte Einzeichnung im Grundriss 1.

Damit ist in diesem einfachen Beispiel der Grundriss 1 vollständig abgearbeitet und in Schalungspläne 2 für die einzelnen Arbeitstakte A, B und C überführt.

In dem in Figur 2 gezeigten Beispiel enthält der Katalog 3 nur jeweils ein Exemplar der rechtwinkligen Richtungsänderung 31a, der T-förmigen Verzweigung 32a sowie des geraden Wandstücks 33a. Für die Suche von Vorkommen in dem Grundriss 1 werden diese Elemente jeweils passend skaliert und/oder gedreht.

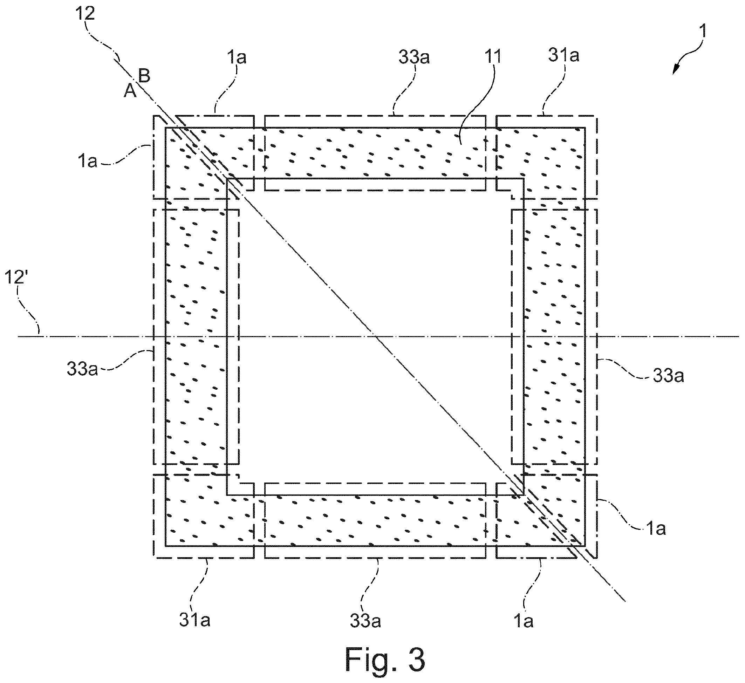

Figur 3 zeigt ein weiteres einfaches Beispiel eines Grundrisses 1, der durch eine Taktfuge 12 in zwei Arbeitstakte A und B unterteilt ist. In diesem Beispiel ist die manuelle Platzierung der Taktfuge 12 jedoch ungünstig gewählt, da in der linken oberen Ecke und in der rechten unteren Ecke des Grundrisses die geplante Wand 11 an der Taktfuge 12 jeweils in einer Schräge endet, die im Katalog 3 nicht als Muster 31a-33a vorkommt. Dementsprechend verbleiben nach der Erkennung der in Figur 3 eingezeichneten rechtwinkligen Richtungsänderungen 31a und der geraden Wandstücke 33a noch Bereiche 1a des Grundrisses 1, die noch nicht abgearbeitet sind. Eine Ausgestaltung des Verfahrens 100 sieht vor, die Taktfuge 12 zu versetzen und/oder zu drehen, und/oder den Benutzer dazu aufzufordern, eine solche Änderung vorzunehmen. Wird die Taktfuge 12 beispielsweise zur Taktfuge 12' geändert, kann analog zu Figur 2 mit dem gleichen Katalog 3 an Mustern 31a-33a der ganze Grundriss 1 abgearbeitet werden.

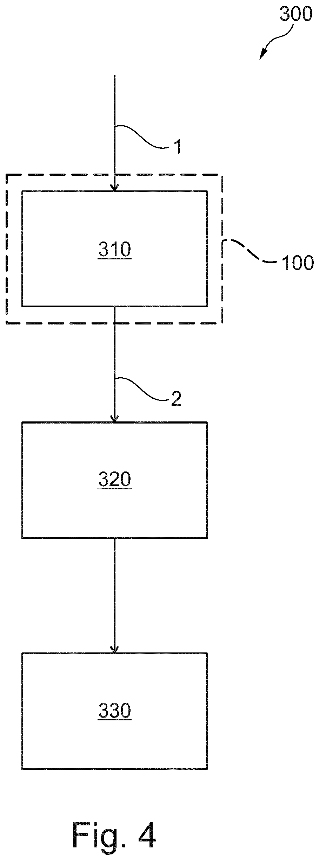

Figur 4 zeigt ein Ausführungsbeispiel des Verfahrens 300 zur Herstellung eines Bauwerks. In Schritt 310 wird gemäß dem Verfahren 100 aus dem geplanten Grundriss 1 mindestens ein Schalungsplan 2 erstellt. In Schritt 320 wird eine zu diesem Schalungsplan 2 konforme räumliche Anordnung von Schalungselementen hergestellt. In Schritt 330 wird ein durch diese räumliche Anordnung definierter Hohlraum mit einem Beton gefüllt.

### Bezugszeichenliste

- 1: geplanter Grundriss
- 1a: noch nicht abgearbeiteter Teil des Grundrisses 1
- 11: geplanter Wandverlauf im Grundriss 1
- 12: Taktfuge im Grundriss 11
- 2: Schalungsplan
- 3: Katalog mit Mustern 31a-33a und räumlichen Anordnungen 31b-33b
- 3a-3c: Kataloge mit unterschiedlichen Optimierungszielen
- 31a-33a: Muster für Verläufe geplanter Wände 11
- 31b-33b: räumliche Anordnungen von Schalungselementen
- 5: Liste bestellbarer Schalungselemente
- 6: Bestellliste
- 100: Verfahren zur Schalungsplanung
- 105: Bereitstellen des Grundrisses 1
- 106: Berechnen der Betonmenge je Arbeitstakt
- 107: Prüfung, ob Betonmenge über Schwellwert
- 108: Ausgeben einer Warnung an den Benutzer
- 109: Unterbreiten eines Vorschlags an den Benutzer
- 110: Bereitstellen des Katalogs 3
- 111: Auswahl des Katalogs 3 aus mehreren Katalogen 3a-3c
- 120: Suchen von Vorkommen eines Musters 31a-33a im Grundriss 1
- 121: Drehen und/oder Skalieren des Musters 31a-33a
- 122: Suchen nach Richtungsänderungen und Verzweigungen
- 123: Suchen nach geraden Wänden
- 130: Hinzufügen der räumlichen Anordnung 31b-33b gemäß Muster 31a-33a
- 131: Drehen und/oder Skalieren der Anordnung 31b-33b
- 140: Markieren des Musters 31a-33a als abgearbeitet
- 150: Prüfung, ob Grundriss 1 vollständig abgearbeitet
- 160: Prüfung, ob noch nicht gesuchte Muster 31a-33a vorhanden
- 170: Fortsetzen der Suche 120 mit neuem Muster
- 180: Prüfung, ob Taktfuge 12 in nicht abgearbeitetem Bereich 1a
- 190: Suchen nach Muster 31a-33a unter Ausblendung der Taktfuge 12
- 195: Prüfung, ob Muster 31a-33a gefunden
- 200a: Versetzen und/oder Drehen der Taktfuge 12
- 200b: Auffordern des Benutzers zur Änderung der Taktfuge 12
- 240: Umwandeln des Schalungsplans 2 in eine Bestellliste 6
- 300: Verfahren zur Herstellung eines Bauwerks
- 310: Bereitstellen des Schalungsplans 2
- 320: Herstellen der räumlichen Anordnung von Schalungselementen
- 330: Füllen des Hohlraums der räumlichen Anordnung mit Beton
- A, B, C: Arbeitstakte

## Patentansprüche

1. Verfahren (100) zur computergestützten Umwandlung eines vorgegebenen Grundrisses (1) in einen Schalungsplan (2) zur Montage von Schalungselementen für mindestens einen Arbeitstakt (A, B, C) der Herstellung eines dem Grundriss (1) entsprechenden Bauwerks durch Betonieren und wobei eine zu dem Schalungsplan (2) konforme räumliche Anordnung von Schalungselementen hergestellt (320) wird, mit den computergestützten Schritten:
• der vorgegebene Grundriss (1) wird durch einen Benutzer bereitgestellt (105), wobei dieser Grundriss (1) vorgegebene Taktfugen (12) enthält, wobei diese Taktfugen (12) nacheinander zu betonierende Bauabschnitte des herzustellenden Bauwerks trennen;
• es wird ein Katalog (3, 3a-3c) bereitgestellt (110), der einer Mehrzahl von Mustern (31a-33a) für Verläufe geplanter Wände (11) jeweils eine räumliche Anordnung (31b-33b) von Schalungselementen zuordnet, mit der dieser Verlauf durch Betonieren in das herzustellende Bauwerk eingebracht werden kann;
• in Bereichen des vorgegebenen Grundrisses (1), in denen noch keine Vorkommen von in dem Katalog (3, 3a-3c) enthaltenen Mustern (31a-33a) gefunden worden sind, werden Vorkommen eines in dem Katalog (3, 3a-3c) enthaltenen Musters (31a-33a) gesucht (120);
• zu jedem gefundenen Vorkommen des Musters (31a-33a) wird dem Schalungsplan (2) diejenige räumliche Anordnung (31b-33b) von Schalungselementen, die der Katalog (3, 3a-3c) dem Muster (31a-33a) zuordnet, hinzugefügt (130);
• es wird geprüft (150), ob der vorgegebene Grundriss (1) vollständig abgearbeitet ist;
• in Antwort darauf, dass der vorgegebene Grundriss (1) nicht vollständig abgearbeitet ist, wird geprüft (160), ob der Katalog weitere Muster (31a-33a) enthält, nach denen in dem vorgegebenen Grundriss (1) noch nicht gesucht wurde,
• in Antwort darauf, dass der Katalog (3, 3a-3c) solche weiteren Muster (31a-33a) enthält, wird mit einem dieser weiteren Muster (31a-33a) zur Suche (120) in dem noch nicht abgearbeiteten Teil des vorgegebenen Grundrisses (1) zurückverzweigt (170), so dass über die Suche (120), das Hinzufügen (130) und das Prüfen (150) iteriert wird, um den vorgegebenen Grundriss (1) vollständig abzuarbeiten;
**dadurch gekennzeichnet, dass** folgende Schritte durchgeführt werden:
• in Antwort darauf, dass der vorgegebene Grundriss (1) nicht vollständig abgearbeitet ist und der Katalog (3, 3a-3c) keine weiteren Muster (33a-33c) enthält, nach denen in dem vorgegebenen Grundriss (1) noch nicht gesucht wurde,
o wird geprüft (180), ob mindestens ein noch nicht abgearbeiteter Bereich (1a) des Grundrisses (1) mindestens eine Taktfuge (12) enthält,
o wird in Antwort darauf, dass dieser Bereich (1a) mindestens eine Taktfuge (12) enthält, der Bereich unter Ausblendung der Taktfuge (12) nach Mustern (31a-33a) aus dem Katalog (3, 3a-3c) durchsucht (190), und
o wird in Antwort darauf, dass in dem Bereich (1a) ein Muster (31a-33a) gefunden wird (195), mindestens eine Taktfuge (12) in dem geplanten Grundriss (1) so versetzt und/oder gedreht (200a), dass sie das gefundene Muster (31a-33a) nicht mehr durchbricht, und/oder es wird eine Aufforderung an den Benutzer ausgegeben, die Taktfuge (12) so zu versetzen (200b), dass sie das gefundene Muster (31a-33a) nicht mehr durchbricht.

2. Verfahren (100) nach Anspruch 1, wobei der Katalog (3) aus einer Mehrzahl von Katalogen (3a-3c) ausgewählt wird (111), die sich hinsichtlich der Optimierungsziele unterscheiden, bezüglich derer die in ihnen enthaltenen räumlichen Anordnungen (31b-33b) von Schalungselementen optimiert sind.

3. Verfahren (100) nach einem der Ansprüche 1 bis 2, wobei das Muster (31a-33a) bei der Suche (120) gedreht und/oder skaliert wird (121) und wobei in Antwort darauf, dass Vorkommen des gedrehten und/oder skalierten Musters (31a-33a) in dem vorgegebenen Grundriss (1) gefunden wurden, die dem Schalungsplan (2) hinzugefügte räumliche Anordnung (31b-33b) von Schalungselementen entsprechend gedreht und/oder skaliert wird (131).

4. Verfahren (100) nach einem der Ansprüche 1 bis 3, wobei der Katalog (3, 3a-3c) mindestens Richtungsänderungen und/oder Verzweigungen von Wänden als Muster (31a-33a) umfasst.

5. Verfahren (100) nach Anspruch 4, wobei der Katalog (3, 3a-3c) mindestens rechtwinklige oder in anderen Winkeln verlaufende Richtungsänderungen von Wänden, Kreuzungen von Wänden, T-förmige Verzweigungen von Wänden, und/oder gebogene Wände mit konstantem Krümmungsradius, als Muster (31a-33a) umfasst.

6. Verfahren (100) nach einem der Ansprüche 4 bis 5, wobei in dem Grundriss (1) zuerst Richtungsänderungen und/oder Verzweigungen von Wänden gesucht werden (122) und danach gerade Wände gesucht werden (123).

7. Verfahren (100) nach einem der Ansprüche 1 bis 6, wobei aus dem Grundriss (1) für mindestens einen Arbeitstakt (A, B, C) die zur Realisierung benötigte Betonmenge und/oder Wandlänge berechnet wird (106), wobei die benötigte Betonmenge und/oder Wandlänge mit einem vorgegebenen Schwellwert verglichen wird (107) und wobei in Antwort darauf, dass der vorgegebene Schwellwert überschritten wird, eine Warnung an den Benutzer ausgegeben wird (108), und/oder dem Benutzer ein Vorschlag für eine Versetzung mindestens einer Taktfuge (12) gemacht wird (109) dergestalt, dass der vorgegebene Schwellwert nicht mehr überschritten wird.

8. Verfahren nach einem der Ansprüche 1 bis 7, wobei für jeden Arbeitstakt (A, B, C) ein separater Schalungsplan (2) erstellt wird.

9. Verfahren (100) nach einem der Ansprüche 1 bis 8, wobei der Schalungsplan (2) durch Abgleich mit einer Liste (5) bestellbarer Schalungselemente in eine Bestellliste (6) für Schalungselemente umgewandelt wird (240).

10. Verfahren (100) nach Anspruch 9, wobei geprüft wird (241), ob es zu zwei oder mehr Schalungselementen in der Bestellliste (6) ein alternatives Schalungselement gibt, das die gleiche Funktion erfüllt, und in Antwort darauf, dass es ein solches alternatives Schalungselement gibt, dieses an die Stelle der zuvor vorgesehenen zwei oder mehr Schalungselemente tritt (242).

11. Verfahren (300) zur Herstellung eines Bauwerks mit den Schritten:
• es wird ein Schalungsplan (2) mit dem Verfahren (100) nach einem der Ansprüche 1-10 erstellt und bereitgestellt (310);
• eine zu dem Schalungsplan (2) konforme räumliche Anordnung von Schalungselementen wird hergestellt (320);
• ein durch diese räumliche Anordnung definierter Hohlraum wird mit einem Beton gefüllt (330).

## Claims

1. A method (100) for the computer-aided conversion of a specified floor plan (1) into a formwork plan (2) for assembling formwork elements for at least one working cycle (A, B, C) of the fabrication of a construction corresponding to the floor plan (1) by concreting, and wherein a spatial arrangement of formwork elements conforming to the formwork plan (2) is produced (320), having the following computer-aided steps:
• the specified floor plan (1) is provided (105) by a user, wherein said floor plan (1) contains specified construction joints (12), wherein said construction joints (12) separate construction sections of the construction to be fabricated, which are to be concreted consecutively;
• a catalog (3, 3a-3c) is provided (110), which assigns to a plurality of patterns (31a-33a) for courses of planned walls (11) in each case a spatial arrangement (31b-33b) of formwork elements, with which said course can be introduced, by concreting, into the construction to be fabricated;
• in areas of the specified floor plan (1) in which no occurrences of patterns (31a-33a) contained in the catalog (3, 3a-3c) have yet been found, occurrences of a pattern (31a-33a) contained in the catalog (3, 3a-3c) are searched for (120);
• for each occurrence of the pattern (31a-33a) found, that spatial arrangement (31b-33b) of formwork elements which the catalog (3, 3a-3c) assigns to the pattern (31a-33a) is added (130) to the formwork plan (2),
• it is checked (150) whether the specified floor plan (1) has been completely processed;
• in response to the specified floor plan (1) not being completely processed, it is checked (160) whether the catalog contains further patterns (31a-33a) which have not yet been searched for in the specified floor plan (1);
• in response to the catalog (3, 3a-3c) containing such further patterns (31a-33a), one of these further patterns (31a-33a) is used to branch back (170) to the search (120) in the part of the specified floor plan (1) which has not yet been processed, so that the adding (130) and the checking (150) are iterated over the search (120) in order to completely process the specified floor plan (1);
**characterized in that** the following steps are performed:
• in response to the specified floor plan (1) not being completely processed and the catalog (3, 3a-3c) not containing any further patterns (33a-33c) which have not yet been searched for in the specified floor plan (1),
∘ it is checked (180) whether at least one area (1a) of the floor plan (1), which has not yet been processed, contains at least one construction joint (12),
∘ in response to said area (1a) containing at least one construction joint (12), the area is searched (190) for patterns (31a-33a) from the catalog (3, 3a-3c), hiding the construction joint (12), and
∘in response to a pattern (31a-33a) being found (195) in the area (1a), at least one construction joint (12) in the planned floor plan (1) is displaced and/or rotated (200a) so that it no longer breaks the pattern (31a-33a) found, and/or a prompt is issued to the user to displace (200b) the construction joint (12) so that it no longer breaks the pattern (31a-33a) found.

2. The method (100) according to Claim 1, wherein the catalog (3) is selected (111) from a plurality of catalogs (3a-3c) which differ in terms of the optimization objectives with respect to which the spatial arrangements (31b-33b) of formwork elements contained therein are optimized.

3. The method (100) according to any one of Claims 1 to 2, wherein the pattern (31a-33a) is rotated and/or scaled (121) during the search (120), and wherein in response to occurrences of the rotated and/or scaled pattern (31a-33a) being found in the specified floor plan (1), the spatial arrangement (31b-33b) of formwork elements added to the formwork plan (2) is rotated and/or scaled (131) accordingly.

4. The method (100) according to any one of Claims 1 to 3, wherein the catalog (3, 3a-3c) comprises at least directional changes and/or branching of walls as patterns (31a-33a).

5. The method (100) according to Claim 4, wherein the catalog (3, 3a-3c) comprises changes of direction of walls, crossings of walls, T-shaped branches of walls, which are at least rectangular or run at other angles, and/or curved walls having a constant radius of curvature, as patterns (31a-33a).

6. The method (100) according to any one of Claims 4 to 5, wherein in the floor plan (1) changes of direction and/or branches of walls are first searched (122) and thereafter straight walls are searched (123).

7. The method (100) according to any one of Claims 1 to 6, wherein the quantity of concrete and/or wall length required for realization is calculated (106) from the floor plan (1) for at least one working cycle (A, B, C), wherein the required quantity of concrete and/or wall length is compared (107) with a specified threshold value and wherein, in response to the specified threshold value being exceeded, a warning is issued (108) to the user and/or a suggestion is made (109) to the user for a displacement of at least one construction joint (12) in such a way that the specified threshold value is no longer exceeded.

8. The method according to any one of Claims 1 to 7, wherein a separate formwork plan (2) is prepared for each working cycle (A, B, C).

9. The method (100) according to any one of Claims 1 to 8, wherein the formwork plan (2) is converted (240) into an order list (6) for formwork elements by comparison with a list (5) of formwork elements which can be ordered.

10. The method (100) according to Claim 9, wherein it is checked (241) whether there is an alternative formwork element, which performs the same function, to two or more formwork elements in the order list (6) and in response to there being such an alternative formwork element, the latter substitutes the two or more formwork elements (242) previously provided.

11. A method (300) for the fabrication of a construction, having the following steps:
• a formwork plan (2) is prepared and provided (310) with the method (100) according to any one of Claims 1-10;
• a spatial arrangement of formwork elements conforming to the formwork plan (2) is produced (320);
• a cavity defined by said spatial arrangement is filled with a concrete (330).

## Revendications

1. Procédé (100) de conversion assistée par ordinateur d'un plan de masse défini (1) en un plan de coffrage (2) pour le montage d'éléments de coffrage pendant au moins un cycle de travail (A, B, C) de la construction par bétonnage d'un ouvrage correspondant au plan de masse (1), où est réalisée (320) une disposition spatiale d'éléments de coffrage conforme au plan de coffrage (2), comprenant les étapes suivantes assistées par ordinateur :
• le plan de masse défini (1) est mis à disposition par un utilisateur (105), ledit plan de masse (1) contenant des joints de cycle définis (12), lesdits joints de cycle (12) séparant des phases de construction à bétonner successivement du bâtiment à réaliser ;
• un catalogue (3, 3a-3c) est mis à disposition (110), lequel associe chaque patron d'une pluralité de patrons (31a-33a) pour les tracés de parois projetées (11) à une disposition spatiale (31b-33b) respective d'éléments de coffrage, avec laquelle ledit tracé peut être appliqué par bétonnage dans l'ouvrage à construire;
• dans des zones du plan de masse défini (1) où aucune occurrence des patrons (31a-33a) contenus dans le catalogue (3, 3a-3c) n'a encore été trouvée, les occurrences d'un patron (31a-33a) contenu dans le catalogue (3, 3a-3c) sont recherchées (120) ;
• pour chaque occurrence trouvée du patron (31a-33a), la disposition spatiale (31b-33b) d'éléments de coffrage que le catalogue (3, 3a-3c) associe au patron (31a-33a) est ajoutée (130) au plan de coffrage (2) ;
• il est vérifié (150) que le plan de masse défini (1) est complètement exécuté ;
• en réaction à une exécution incomplète du plan de masse défini (1), il est vérifié (160) si le catalogue contient d'autres patrons (31a-33a) n'ayant pas encore été recherchés dans le plan de masse défini (1) ;
• en réaction à ce que le catalogue (3, 3a-3c) contient de tels autres patrons (31a-33a), il est retourné (170) avec l'un desdits autres patrons (31a-33a) à la recherche (120) dans la partie non encore exécutée du plan de masse défini (1), de manière à réitérer la recherche (120), l'ajout (130) et la vérification (150) pour l'exécution complète du plan de masse défini (1) ;
**caractérisé en ce que** les étapes suivantes sont exécutées :
• en réaction à une exécution incomplète du plan de masse défini (1) et à l'absence dans le catalogue (3, 3a-3c) d'autres patrons (33a-33c) n'ayant pas encore été recherché dans le plan de masse défini (1),
∘ il est vérifié (180) qu'au moins une zone (1a) non encore traitée du plan de masse (1) contient au moins un joint de cycle (12),
∘ en réaction à ce que ladite zone (1a) contient au moins un joint de cycle (12), ladite zone est explorée (190) à la recherche de patrons (31a-33a) du catalogue (3, 3a-3c) en effaçant le joint de cycle (12), et
∘ en réaction à ce que dans la zone (1a) un patron (31a-33a) est trouvé (195), au moins un joint de cycle (12) est déplacé et/ou tourné (200a) dans le plan de masse projeté (1) de manière à ne plus traverser le patron trouvé (31a-33a), et/ou une demande de déplacement (200b) du joint de cycle (12) est transmise à l'utilisateur pour que celui-ci ne traverse plus le patron trouvé (31a-33a).

2. Procédé (100) selon la revendication 1, où le catalogue (3) est sélectionné (111) parmi une pluralité de catalogues (3a-3c) qui se distinguent sous l'aspect d'objectifs d'optimisation, les dispositions spatiales (31b-33b) d'éléments de coffrage qu'ils contiennent étant optimisées.

3. Procédé (100) selon l'une des revendications 1 à 2, où le patron (31a-33a) est tourné et/ou mis à l'échelle (121) lors de la recherche (120), et où, en réaction à ce que des occurrences de patron tourné et/ou mis à l'échelle (31a-33a) sont trouvées dans le plan de masse défini (1), la disposition spatiale (31b-33b) d'éléments de coffrage ajoutée au plan de coffrage (2) est tournée et/ou mise à l'échelle (131) en conséquence.

4. Procédé (100) selon l'une des revendications 1 à 3, où le catalogue (3, 3a-3c) comprend au moins des changements de direction et/ou des jonctions de parois en tant que patrons (31a-33a).

5. Procédé (100) selon la revendication 4, où le catalogue (3, 3a-3c) comprend comme patrons au moins des changements de direction de parois à angle droit ou suivant d'autres angles, des intersections de parois, des jonctions en T de parois et/ou des parois courbées suivant un rayon de courbure constant (31a-33a).

6. Procédé (100) selon l'une des revendications 4 à 5, où sont recherchés d'abord (122) des changements de direction et/ou des jonctions de parois dans le plan de masse (1), puis des parois rectilignes (123).

7. Procédé (100) selon l'une des revendications 1 à 6, où sont calculées (106) à partir du plan de masse (1) pour au moins un cycle de travail (A, B, C) la quantité de béton et/ou la longueur de paroi exigées pour la réalisation, la quantité de béton et/ou la longueur de paroi exigées étant comparées à une valeur seuil définie (107) et où, en réaction à un dépassement de la valeur seuil définie, un avertissement est transmis à l'utilisateur (108), et/ou une demande de déplacement d'au moins un joint de cycle (12) est transmise à l'utilisateur (109) pour que la valeur seuil définie ne soit plus dépassée.

8. Procédé selon l'une des revendications 1 à 7, où un plan de coffrage (2) distinct est créé pour chaque cycle de travail (A, B, C).

9. Procédé (100) selon l'une des revendications 1 à 8, où le plan de coffrage (2) est converti en une liste de commande (6) pour des éléments de coffrage (240) par comparaison avec une liste (5) d'éléments de coffrage pouvant être commandés.

10. Procédé (100) selon la revendication 9, où il est vérifié (241) si un élément de coffrage alternatif est présenté dans la liste de commande (6) pour deux ou plusieurs éléments de coffrage, remplissant la même fonction, et où, en réaction à l'existence d'un tel élément de coffrage alternatif, celui-ci est substitué aux deux ou plusieurs éléments de coffrage précédemment projetés (242).

11. Procédé (300) de construction d'un ouvrage, comprenant les étapes suivantes :
• un plan de coffrage (2) est établi et mis à disposition (310) au moyen du procédé (100) selon l'une des revendications 1 à 10 ;
• une disposition spatiale d'éléments de coffrage conforme au plan de coffrage (2) est réalisée (320) ;
• une cavité définie par ladite disposition spatiale est comblée par du béton (330).
